# EUROPEAN PATENT SPECIFICATION

(11) **EP 3 185 479 B1**
(45) Date of publication and mention of the grant of the patent: **10.07.2019**
(21) Application number: 15834230.3
(22) Date of filing: 13.04.2015
(51) Int. Cl.: H04L 12/26

(54) **METHOD OF IDENTIFYING OPTICAL MODULE STATUS IN ONU, ONU AND STORAGE MEDIUM**
VERFAHREN ZUR IDENTIFIZIERUNG VON OPTISCHE MODUL STATUS IN ONU, ONU UND SPEICHERMEDIUM
PROCÉDÉ D'IDENTIFICATION D'ÉTAT DE MODULE OPTIQUE DANS UNE ONU, ONU ET SUPPORT D'INFORMATIONS

(30) Priority: 18.08.2014 CN 201410407828
(43) Date of publication of application: 28.06.2017
(73) Proprietor: ZTE Corporation, Shenzhen, Guangdong 518057 (CN)
(72) Inventor: JIANG, Kun, Shenzhen Guangdong 518057 (CN); ZHANG, Rong, Shenzhen Guangdong 518057 (CN); SUN, Qihui, Shenzhen Guangdong 518057 (CN)
(74) Representative: Lavoix
(86) International application number: PCT/CN2015/076445
(87) International publication number: WO 2016/026311

(56) References cited:
- CN-A- 103 312 409
- CN-A- 103 560 823
- CN-A- 103 873 308
- CN-A- 103 873 308
- US-A1- 2005 158 048
- US-B2- 7 502 328

## Description

### TECHNICAL FIELD

The present disclosure relates to a Passive Optical Network (PON) technology, and in particular to a method for identifying a state of an optical module in an Optical Network Unit (ONU), an ONU, and a computer storage medium.

### BACKGROUND

In a PON, a transceiving bandwidth of a 1G Ethernet Passive Optical Network (EPON) optical module may reach 1Gbps. A transceiving bandwidth of a 10G EPON optical module may reach 10Gbps. Thus, a requirement of an optical network on a transmission rate may be met.

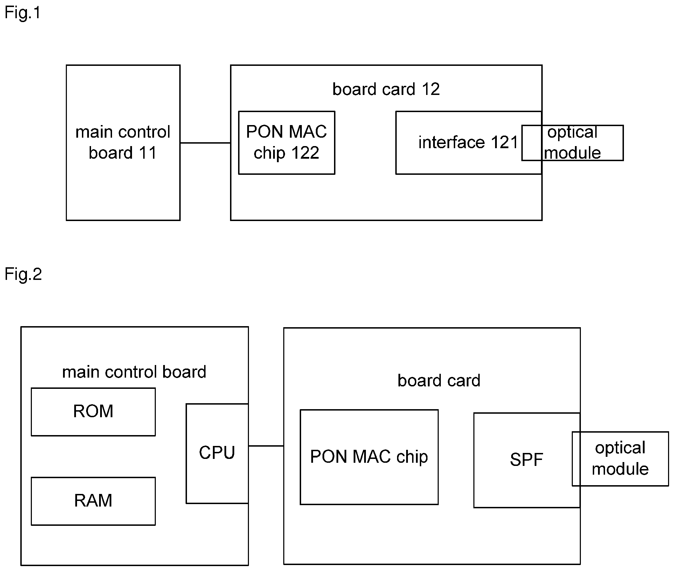

A 1G EPON optical module as well as a 10G EPON optical module may in general be inserted in, and pulled out of, an interface of an ONU of a user terminal in a PON, to implement a service function of the ONU at a higher transmission rate. Fig.1 is a diagram of a structure of hardware of an ONU. As shown in Fig.1, the ONU includes a main control board 11 and a board card 12. A 1G EPON optical module or a 10G EPON optical module is inserted in, and pulled out of, the board card 12 through an interface 121. A PON MAC Media Access Address chip 122 on the board card 12 may be configured with an operating mode corresponding to a state of the optical module, such that the ONU may implement an ONU service through an operating mode of the 1G EPON optical module or of the 10G EPON optical module. The state of the optical module may include the optical module being inserted, being pulled out, being online, being offline, etc. It therefore is of great importance to accurately identify the state of the optical module.

CN103873308A discloses a self-detection method of ONU long-luminescence.

### SUMMARY

In view of this, embodiments herein provide a method for identifying a state of an optical module in an ONU as well as an ONU, capable of improving accuracy in identifying the state of the optical module.

A technical solution of an embodiment herein may be implemented as follows.

According to an embodiment herein, a method for identifying a state of an optical module in an Optical Network Unit, ONU, includes:
acquiring a current identification period for identifying the state of the optical module;
acquiring a state of the optical module in a previous identification period;
equally dividing the current identification period into at least two sub-periods;
acquiring, within each sub-period of the current identification period, a parameter of the optical module; and
determining the state of the optical module in the current identification period according to the state of the optical module in the previous identification period and a total number of successive sub-periods of the current identification period within each of which acquisition of the parameter of the optical module succeeds.

The ONU may include a main control board and a board card. The board card may include the optical module. The method may include:
sending, by a Central Processing Unit, CPU, of the main control board within each sub-period of the current identification period, a request for the parameter of the optical module to the optical module; and at the same time starting timing using a timer;
in response to receiving, by the CPU within a timing period of the timer, the parameter of the optical module reported by the optical module, confirming that acquisition of the parameter of the optical module within the each sub-period succeeds; and
in response to receiving, by the CPU within the timing period of the timer, no parameter of the optical module reported by the optical module, confirming that acquisition of the parameter of the optical module within the each sub-period fails.

The method may further include:
computing the total number of the successive sub-periods of the current identification period within each of which acquisition of the parameter of the optical module succeeds;
determining whether the total number of the successive sub-periods of the current identification period within each of which acquisition of the parameter of the optical module succeeds is within a pre-set first range; and
in response to determining that the total number of the successive sub-periods of the current identification period within each of which acquisition of the parameter of the optical module succeeds is within the pre-set first range, determining the state of the optical module in the current identification period according to the state of the optical module in the previous identification period.

The in response to determining that the total number of the successive sub-periods of the current identification period within each of which acquisition of the parameter of the optical module succeeds is within the pre-set first range, determining the state of the optical module in the current identification period according to the state of the optical module in the previous identification period may include:
in response to determining that the state of the optical module in the previous identification period is a state of being online, determining that the state of the optical module in the current identification period is the state of being online; and
in response to determining that the state of the optical module in the previous identification period is a state of being offline, determining that the state of the optical module in the current identification period is a state of being inserted. The state of the optical module may include the state of being online and the state of being inserted.

The method may further include:
among all sub-periods of the current identification period, computing a total number of successive sub-periods of the current identification period within each of which acquisition of the parameter of the optical module fails;
determining whether the total number of the successive sub-periods of the current identification period within each of which acquisition of the parameter of the optical module fails is within a pre-set second range; and
in response to determining that the total number of the successive sub-periods of the current identification period within each of which acquisition of the parameter of the optical module fails is within the pre-set second range, determining the state of the optical module in the current identification period according to the state of the optical module in the previous identification period.

The in response to determining that the total number of the successive sub-periods of the current identification period within each of which acquisition of the parameter of the optical module fails is within the pre-set second range, determining the state of the optical module in the current identification period according to the state of the optical module in the previous identification period may include:
in response to determining that the state of the optical module in the previous identification period is a state of being online, determining that the state of the optical module in the current identification period is a state of being pulled out; and
in response to determining that the state of the optical module in the previous identification period is a state of being offline, determining that the state of the optical module in the current identification period is the state of being offline.

The state of the optical module may include the state of being offline and the state of being pulled out.

The method may further include: after determining the state of the optical module in the current identification period,
determining a type of the optical module according to the acquired parameter of the optical module; and
configuring a Passive Optical Network, PON, MAC Media Access Address chip of the ONU with an operating mode corresponding to the type of the optical module to perform an ONU service.

According to an embodiment herein, an Optical Network Unit (ONU) includes:
a first acquiring unit arranged for: acquiring a current identification period for identifying a state of an optical module;
a second acquiring unit arranged for: acquiring a state of the optical module in a previous identification period;
a first dividing unit arranged for: equally dividing the current identification period into at least two sub-periods;
a third acquiring unit arranged for: acquiring, within each sub-period of the current identification period, a parameter of the optical module; and
a first determining unit arranged for: determining the state of the optical module in the current identification period according to the state of the optical module in the previous identification period and a total number of successive sub-periods of the current identification period within each of which acquisition of the parameter of the optical module succeeds.

The ONU may include a main control board and a board card. The board card may include the optical module. The ONU may further include a first confirming unit arranged for:
upon confirming, within each sub-period of the current identification period, that a Central Processing Unit, CPU, of the main control board has sent, within the each sub-period of the current identification period, a request for the parameter of the optical module to the optical module, starting timing using a timer;
in response to confirming that the CPU has received, within a timing period of the timer, the parameter of the optical module reported by the optical module, confirming that acquisition of the parameter of the optical module within the each sub-period succeeds; and
in response to confirming that the CPU has received, within the timing period of the timer, no parameter of the optical module reported by the optical module, confirming that acquisition of the parameter of the optical module within the each sub-period fails.

The first determining unit may be further arranged for:
computing the total number of the successive sub-periods of the current identification period within each of which acquisition of the parameter of the optical module succeeds;
determining whether the total number of the successive sub-periods of the current identification period within each of which acquisition of the parameter of the optical module succeeds is within a pre-set first range; and
in response to determining that the total number of the successive sub-periods of the current identification period within each of which acquisition of the parameter of the optical module succeeds is within the pre-set first range, determining the state of the optical module in the current identification period according to the state of the optical module in the previous identification period.

The first determining unit may be further arranged for:
in response to determining that the state of the optical module in the previous identification period is a state of being online, determining that the state of the optical module in the current identification period is the state of being online; and
in response to determining that the state of the optical module in the previous identification period is a state of being offline, determining that the state of the optical module in the current identification period is a state of being inserted. The state of the optical module may include the state of being online and the state of being inserted.

The ONU may further include a second determining unit.

The first confirming unit may be further arranged for:
among all sub-periods of the current identification period, computing a total number of successive sub-periods of the current identification period within each of which acquisition of the parameter of the optical module fails;
determining whether the total number of the successive sub-periods of the current identification period within each of which acquisition of the parameter of the optical module fails is within a pre-set second range; and
in response to determining that the total number of the successive sub-periods of the current identification period within each of which acquisition of the parameter of the optical module fails is within the pre-set second range, triggering the second determining unit.

The second determining unit may be arranged for: determining the state of the optical module in the current identification period according to the state of the optical module in the previous identification period.

The second determining unit may be further arranged for:
in response to determining that the state of the optical module in the previous identification period is a state of being online, determining that the state of the optical module in the current identification period is a state of being pulled out; and
in response to determining that the state of the optical module in the previous identification period is a state of being offline, determining that the state of the optical module in the current identification period is the state of being offline.

The state of the optical module may include the state of being offline and the state of being pulled out.

The ONU may include a Passive Optical Network, PON, MAC Media Access Address chip.

The ONU may further include a third determining unit and a first configuring unit.

The third determining unit may be arranged for: determining a type of the optical module according to the parameter of the optical module acquired by the third acquiring unit.

The first configuring unit may be arranged for: configuring the PON MAC chip with an operating mode corresponding to the type of the optical module to perform an ONU service.

According to an embodiment herein, a computer storage medium has stored therein computer-executable instructions for executing the method for identifying a state of an optical module in an ONU.

With a method for identifying a state of an optical module in an ONU, an ONU, and a computer storage medium according to embodiments herein, a current identification period for identifying the state of the optical module is acquired; a state of the optical module in a previous identification period is acquired; the current identification period is equally divided into at least two sub-periods; a parameter of the optical module is acquired within each sub-period of the current identification period; the state of the optical module in the current identification period is determined according to the state of the optical module in the previous identification period and a total number of successive sub-periods of the current identification period within each of which acquisition of the parameter of the optical module succeeds. With a technical solution herein, accuracy in identifying a state of an optical module may be improved.

### BRIEF DESCRIPTION OF THE DRAWINGS

Fig.1 is a diagram of a structure of hardware of an ONU.
Fig.2 is a diagram of a structure of hardware of an ONU according to an embodiment herein.
Fig.3 is a flowchart of a method for identifying a state of an optical module in an ONU according to an embodiment herein.
Fig.4 is a flowchart of a method for identifying a state of an optical module in an ONU according to an embodiment herein.
Fig.5 is a diagram of a structure of an ONU according to an embodiment herein.

### DETAILED DESCRIPTION

Embodiments herein are elaborated below with reference to the drawings. The embodiments described herein are intended to describe and explain the disclosure and instead of limiting the disclosure.

An embodiment herein provides a method for identifying a state (that is, status) of an optical module in an ONU. Hardware composition of the ONU is as shown in Fig.2. The ONU includes a main control board and a board card. The main control board includes a Central Processing Unit (CPU), a Read-Only Memory (ROM), and a Random Access Memory (RAM). The CPU communicates with the optical module of the board card via an Inter-Integrated Circuit (I2C) interface. The optical module is inserted in, and pulled out of, the board card via a Small Form Pluggable (SPF) interface. The CPU communicates with a PON MAC chip of the board card in a mode such as by a Universal Asynchronous Receiver/Transmitter (UART), by a Gigabit Medium Independent Interface (GMII), by RESET, etc.

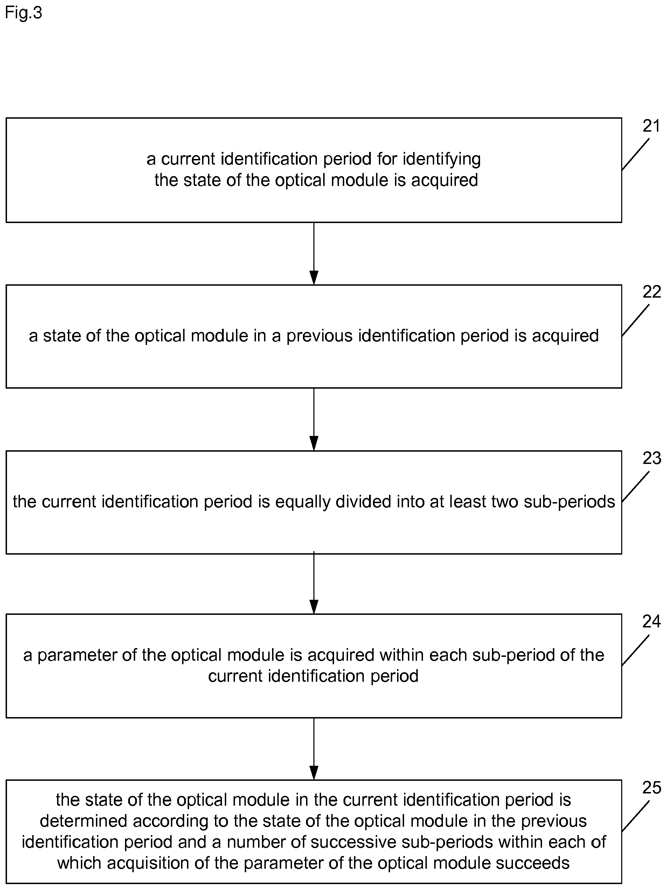

Fig.3 is a flowchart of a method for identifying a state of an optical module in an ONU according to an embodiment herein. As shown in Fig.3, the method includes steps as follows.

In step 21, a current identification period for identifying the state of the optical module is acquired.

An identification period may be configured, in a board card managing software program corresponding to the hardware CPU, for identifying the state of the optical module. The state of the optical module may include four states, namely, the optical module being inserted, being pulled out, being online, being offline. The identification period may be set as any integer of 1 second (s) to 3s. The identification period may be set flexibly according to resource processing capacity of the CPU of the ONU.

In step 22, a state of the optical module in a previous identification period is acquired.

An acquired state of the optical module in an identification period will be stored by the CPU.

In step 23, the current identification period is equally divided into at least two sub-periods.

The current identification period may be equally divided, according to a predetermined interval M, into N sub-periods.

In step 24, a parameter of the optical module is acquired within each sub-period of the current identification period.

The parameter of the optical module may include a transceiving bandwidth of the optical module, such as 1 Gbps or 10 Gbps, and an optical power of the optical module. The CPU may send, through the I2C bus in a sub-period N1 (of the N sub-periods), a request to the optical module to request for the parameter of the optical module.

In step 25, the state of the optical module in the current identification period is determined according to the state of the optical module in the previous identification period and a number of successive sub-periods within each of which acquisition of the parameter of the optical module succeeds.

Herein, in the sub-period N1, after the request for the parameter of the optical module is sent, a timer may be started. When the CPU has received, within a timing period of the timer, the parameter of the optical module reported by the optical module, it may be confirmed that acquisition of the parameter of the optical module within the each sub-period by the CPU succeeds. When the CPU has received, within the timing period of the timer, no parameter of the optical module reported by the optical module, it may be confirmed that acquisition of the parameter of the optical module within the each sub-period by the CPU fails. Among the N sub-periods, the number of the successive sub-periods within each of which acquisition of the parameter of the optical module succeeds may be computed. It may be determined whether the number of the successive sub-periods within each of which acquisition of the parameter of the optical module succeeds is within a pre-set first range. The state of the optical module in the current identification period may be determined according to the state of the optical module in the previous identification period when the number of the successive sub-periods within each of which acquisition of the parameter of the optical module succeeds is within the pre-set first range. An upper limit of the first range may be 10. A lower limit of the first range may be N.

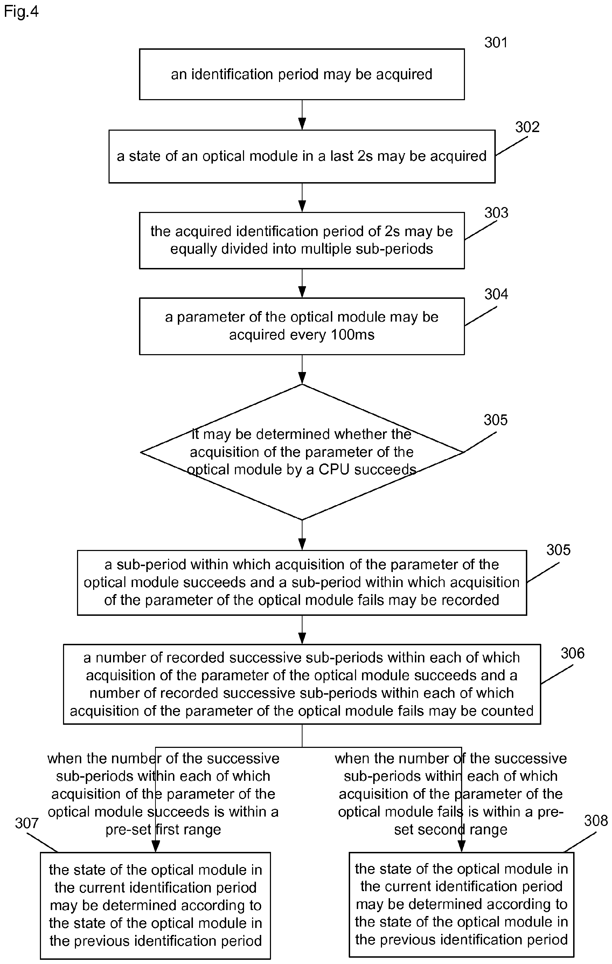

Fig.4 is a flowchart of a method for identifying a state of an optical module in an ONU according to an embodiment herein. A technical solution of an embodiment herein is further described below with reference to Fig.4.

In Fig.4, the identification period may be 2s and the interval M = 100 ms, for an example. As shown in Fig.4, the method may include steps as follows.

In step 301, an identification period may be acquired.

The CPU may read a parameter for characterizing the identification period in a board card managing software program. The parameter for characterizing the identification period may be equal to 2s.

In step 302, a state of an optical module in a last 2s may be acquired.

The CPU may acquire the state of the optical module in the last 2s by reading a parameter Last Status in the board card managing software program.

In step 303, the acquired identification period 2s may be equally divided (with an interval M = 100ms) into N = 20 sub-periods. Each of the sub-periods may be 100ms.

In step 304, a parameter of the optical module may be acquired every 100ms.

The CPU may send the optical module a request for the parameter of the optical module, such as through an I2C bus every 100ms. Timing may be started using a timer as soon as the request is sent.

In step 305, for each sub-period in the identification period 2s, it may be determined, within a timing period of the timer, whether the acquisition of the parameter of the optical module by a CPU succeeds, that is, whether the CPU has successfully acquired the parameter of the optical module within the timing period of the timer.

When it is determined that the CPU has successfully acquired the parameter of the optical module, such as a transceiving bandwidth of the optical module, a sub-period within which the parameter of the optical module has been successfully acquired may be recorded.

When it is determined that the CPU has failed to acquire the parameter of the optical module, such as the transceiving bandwidth of the optical module, a sub-period within which the parameter of the optical module has failed to be acquired may be recorded.

If in any sub-period, within the timing period of the timer, the CPU has received the transceiving bandwidth of the optical module reported by the optical module, it may be confirmed that the CPU has successfully acquired the parameter of the optical module. Otherwise if in the any sub-period, within the timing period of the timer, the CPU has received no transceiving bandwidth of the optical module reported by the optical module, it may be confirmed that that the CPU has failed to acquire the parameter of the optical module.

When it is determined that the CPU has successfully acquired the transceiving bandwidth of the optical module in a sub-period, a first pre-set value such as 1 may be assigned to an element of an array ADD [1] [N] for characterizing statistics in a board card managing software program corresponding to the sub-period. Otherwise when it is determined that the CPU has failed to acquire the transceiving bandwidth of the optical module in a sub-period, a second pre-set value such as 0 may be assigned to an element of the array ADD [1] [N] corresponding to the sub-period. A value of an element in the array ADD [1] [N] may correspond to a result of determining whether the CPU has successfully acquired the parameter of the optical module in a sub-period. For example, the CPU may initialize he array by setting all elements therein to 0. 1 may be assigned to an element ADD [1] [1] when it is determined that the CPU has successfully acquired the transceiving bandwidth of the optical module in the first sub-period of the current 2s. 0 may be assigned to an element ADD [1] [3] when it is determined that the CPU has failed to acquire the transceiving bandwidth of the optical module in the third sub-period of the current 2s.

In step 306, after the determination has been performed on all the sub-periods, a number of recorded successive sub-periods within each of which acquisition of the parameter of the optical module succeeds and a number of recorded successive sub-periods within each of which acquisition of the parameter of the optical module fails may be counted.

Step 307 may be performed when the number of the successive sub-periods within each of which acquisition of the parameter of the optical module succeeds is within a first range [10, 20].

Step 308 may be performed when the number of the successive sub-periods within each of which acquisition of the parameter of the optical module fails is within a second range [10, 20].

After the determination has been performed on all the sub-periods, a number of successive elements in the array ADD [1] [N] with the value 1 may be counted and set as the number of the successive sub-periods (among all the sub-periods) within each of which acquisition of the transceiving bandwidth of the optical module succeeds. After the determination has been performed on all the sub-periods, a number of successive elements in the array ADD [1] [N] with the value 0 may be counted and set as the number of the successive sub-periods (among all the sub-periods) within each of which acquisition of the parameter of the optical module fails. The second range may be set as needed and may be identical to the first range.

In step 307, the state of the optical module in the current identification period may be determined according to the state of the optical module in the previous identification period.

When the optical module had been online in the last 2s, it may be determined that the optical module is also online in the current 2s. When the optical module had been offline in the last 2s, it may be determined that the optical module is being inserted in the current 2s. After it is determined that the optical module is in a state of being online or a state of being inserted in the current 2s, the method may further include steps as follows.

A type of the optical module may be determined according to the acquired parameter of the optical module, such as the transceiving bandwidth of the optical module. A PON MAC chip may be configured with an operating mode of the optical module corresponding to the type of the optical module through an interface, such as a UART, a GMII, a RESET interface, etc. The PON MAC chip may be configured with an operating mode of the 1G EPON optical module when it is determined that the optical module is a 1G EPON optical module. The PON MAC chip may be configured with an operating mode of the 10G EPON optical module when it is determined that the optical module is a 10G EPON optical module, such that the ONU may implement an ONU service at a transmission rate of 1Gbps or 10Gbps.

In step 308, the state of the optical module in the current identification period may be determined according to the state of the optical module in the previous identification period.

When the optical module had been online within the last 2s, it may be determined that the optical module is being pulled out in the current 2s and a warning may be given. When the optical module had been offline within the last 2s, it may be determined that the optical module is still offline in the current 2s.

With the technical solution according to an embodiment herein, a state of an optical module may be identified automatically with a high rate of identification. In addition, in existing art, there may be one-to-one correspondence between an optical module and a board card, that is, different board cards may be distinguished by the different types of optical modules that are inserted respectively in the board cards. During an ONU upgrade, whenever an optical module is to be replaced, the board card in which the optical module is inserted has to be replaced, too. At the same time, a connection between a main control board and a power supply system is disconnected to manually reconfigure a PON MAC chip with an operating mode. With the technical solution, a type of the optical module may be determined according to an acquired parameter of the optical module; a PON MAC chip may be configured with an operating mode of the optical module corresponding to the type of the optical module, requiring no manual intervention, thereby saving manpower. In addition, with the technical solution, the optical module may be packed in SPF. I.e., different types of optical modules may be inserted in, and pulled out of, the same board card. To upgrade an ONU, only the optical module needs to be replaced without the need to replace the board card, saving manpower and material input.

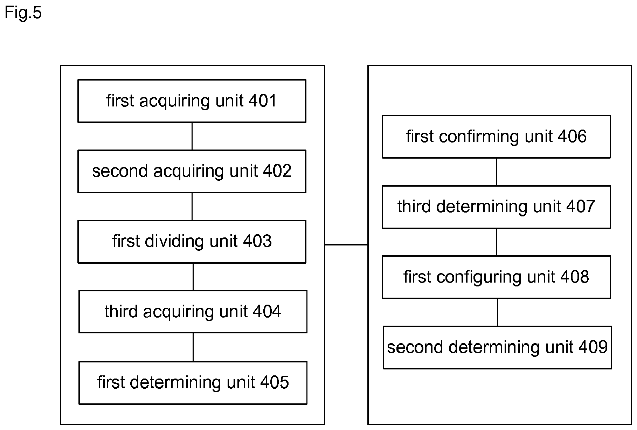

Based on the method for identifying a state of an optical module in an ONU, an embodiment herein also recites an ONU. Fig.5 is a diagram of a structure of an ONU according to an embodiment herein. As shown in Fig.5, the ONU includes a first acquiring unit 401, a second acquiring unit 402, a first dividing unit 403, a third acquiring unit 404, and a first determining unit 405.

The first acquiring unit 401 is arranged for: acquiring a current identification period.

The second acquiring unit 402 is arranged for: acquiring a state of the optical module in a previous identification period.

The first dividing unit 403 is arranged for: equally dividing the current identification period into at least two sub-periods.

The third acquiring unit 404 is arranged for: acquiring, within each sub-period of the current identification period, a parameter of the optical module.

The first determining unit 405 is arranged for: determining the state of the optical module in the current identification period according to the state of the optical module in the previous identification period and a number of successive sub-periods within each of which acquisition of the parameter of the optical module succeeds.

As shown in Fig.2, the ONU may include hardware such as a main control board and a board card. The board card may include a PON MAC chip and the optical module.

As shown in Fig.5, the ONU may further include a first confirming unit 406 arranged for: upon confirming, within each sub-period of the current identification period, that a Central Processing Unit (CPU) of the main control board has sent, within the each sub-period of the current identification period, a request for the parameter of the optical module to the optical module, starting timing using a timer; in response to confirming that the CPU has received, within a timing period of the timer, the parameter of the optical module reported by the optical module, confirming that acquisition of the parameter of the optical module within the each sub-period succeeds; and in response to confirming that the CPU has received, within the timing period of the timer, no parameter of the optical module reported by the optical module, confirming that acquisition of the parameter of the optical module within the each sub-period fails.

In one embodiment, the first determining unit 405 may be arranged for: computing the number of the successive sub-periods within each of which acquisition of the parameter of the optical module succeeds; determining whether the number of the successive sub-periods within each of which acquisition of the parameter of the optical module succeeds is within a pre-set first range; and in response to determining that the number of the successive sub-periods within each of which acquisition of the parameter of the optical module succeeds is within the pre-set first range, determining the state of the optical module in the current identification period according to the state of the optical module in the previous identification period. When the state of the optical module in the previous identification period is a state of being online, the first determining unit 405 may determine that the state of the optical module in the current identification period is the state of being online, that is, the optical module is still online. When the state of the optical module in the previous identification period is a state of being offline, the first determining unit 405 may determine that the state of the optical module in the current identification period is a state of being inserted, that is, the optical module may undergo an operation of being inserted.

As shown in Fig.5, the ONU may further include a third determining unit 407 and a first configuring unit 408.

When the first determining unit 405 determines the state of the optical module in the current identification period, the third determining unit 407 may be triggered. The third determining unit 407 may determine a type of the optical module according to the parameter of the optical module acquired by the third acquiring unit 404. The first configuring unit 408 may configure the PON MAC chip with an operating mode corresponding to the type of the optical module to perform an ONU service.

As shown in Fig.5, the ONU may further include a second determining unit 409.

The first confirming unit 405 may compute, among all sub-periods of the current identification period, a number of sub-periods within each of which acquisition of the parameter of the optical module fails; determine whether the number of the successive sub-periods within each of which acquisition of the parameter of the optical module fails is within a pre-set second range; and in response to determining that the number of the successive sub-periods within each of which acquisition of the parameter of the optical module fails is within the pre-set second range, trigger the second determining unit 409.

The second determining unit 409 may determine the state of the optical module in the current identification period according to the state of the optical module in the previous identification period. When the state of the optical module in the previous identification period is a state of being online, the second determining unit 409 may determine that the state of the optical module in the current identification period is a state of being pulled out. When the state of the optical module in the previous identification period is a state of being offline, the second determining unit 409 may determine that the state of the optical module in the current identification period is the state of being offline, that is, the optical module is still offline.

Those skilled in the art shall understand that a function implemented by a processing module in the ONU shown in Fig.5 may be understood with reference to related description of the method for identifying a state of an optical module in an ONU. Those skilled in the art shall understand that a function implemented by a processing module in the ONU shown in Fig.5 may be implemented by a program running on a processor or by a specific logic circuit.

In an actual application, the first acquiring unit 401, the second acquiring unit 402, the first dividing unit 403, the third acquiring unit 404, the first determining unit 405, the first confirming unit 406, the third determining unit 407, the first configuring unit 408, and the second determining unit 409 may all be implemented by a CPU, a Digital Signal Processor (DSP), a Micro Processor Unit (MPU), a Field Programmable Gate Array (FPGA), etc. The CPU, the DSP, the MPU, and the FPGA may be built in the ONU.

An embodiment herein also discloses a computer storage medium, having stored therein computer-executable instructions for executing the method for identifying a state of an optical module in an ONU.

Those skilled in the art will know that an embodiment herein may provide a method, system, or computer program product. Therefore, an embodiment herein may take on a form of hardware, software, or a combination thereof. In addition, an embodiment herein may take on a form of a computer program product implemented on one or more computer available storage media (including but not limited to, magnetic disk memory, optic memory, and the like) containing computer available program codes.

The disclosure is illustrated with reference to flowcharts and/or block diagrams of the method, device (system) and computer-program product according to embodiments described herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a non-transitory computer-readable memory capable of guiding a computer or another programmable data processing device to work in a given way, such that the instructions stored in the computer-readable memory generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

What described are merely embodiments herein, and are not intended to limit the scope of the disclosure.

### Industrial Applicability

With an embodiment herein, a state of an optical module may be identified automatically with a high rate of identification. In addition, a type of the optical module may be determined according to an acquired parameter of the optical module; a PON MAC chip may be configured with an operating mode of the optical module corresponding to the type of the optical module, requiring no manual intervention, thereby saving manpower.

## Claims

1. A method for identifying a state of an optical module in an Optical Network Unit, ONU, **characterised in that** the method comprises:
acquiring (21) a current identification period for identifying the state of the optical module;
acquiring (22) a state of the optical module in a previous identification period;
equally dividing (23) the current identification period into at least two sub-periods;
acquiring (24), within each sub-period of the current identification period, a parameter of the optical module; and
determining (25) the state of the optical module in the current identification period according to the state of the optical module in the previous identification period and a total number of successive sub-periods of the current identification period within each of which acquisition of the parameter of the optical module succeeds.

2. The method according to claim 1, wherein the ONU comprises a main control board and a board card, the board card comprises the optical module, and the method comprises:
sending, by a Central Processing Unit, CPU, of the main control board within each sub-period of the current identification period, a request for the parameter of the optical module to the optical module; and at the same time starting timing using a timer;
in response to receiving, by the CPU within a timing period of the timer, the parameter of the optical module reported by the optical module, confirming that acquisition of the parameter of the optical module within the each sub-period succeeds; and
in response to receiving, by the CPU within the timing period of the timer, no parameter of the optical module reported by the optical module, confirming that acquisition of the parameter of the optical module within the each sub-period fails.

3. The method according to claim 1 or 2, further comprising:
computing the total number of the successive sub-periods of the current identification period within each of which acquisition of the parameter of the optical module succeeds;
determining whether the total number of the successive sub-periods of the current identification period within each of which acquisition of the parameter of the optical module succeeds is within a pre-set first range; and
in response to determining that the total number of the successive sub-periods of the current identification period within each of which acquisition of the parameter of the optical module succeeds is within the pre-set first range, determining the state of the optical module in the current identification period according to the state of the optical module in the previous identification period.

4. The method according to claim 3, wherein the in response to determining that the total number of the successive sub-periods of the current identification period within each of which acquisition of the parameter of the optical module succeeds is within the pre-set first range, determining the state of the optical module in the current identification period according to the state of the optical module in the previous identification period comprises:
in response to determining that the state of the optical module in the previous identification period is a state of being online, determining that the state of the optical module in the current identification period is the state of being online; and
in response to determining that the state of the optical module in the previous identification period is a state of being offline, determining that the state of the optical module in the current identification period is a state of being inserted, wherein the state of the optical module comprises the state of being online and the state of being inserted.

5. The method according to claim 2, further comprising:
among all sub-periods of the current identification period, computing a total number of successive sub-periods of the current identification period within each of which acquisition of the parameter of the optical module fails;
determining whether the total number of the successive sub-periods within of the current identification period each of which acquisition of the parameter of the optical module fails is within a pre-set second range; and
in response to determining that the total number of the successive sub-periods of the current identification period within each of which acquisition of the parameter of the optical module fails is within the pre-set second range, determining the state of the optical module in the current identification period according to the state of the optical module in the previous identification period.

6. The method according to claim 5, wherein the in response to determining that the total number of the successive sub-periods of the current identification period within each of which acquisition of the parameter of the optical module fails is within the pre-set second range, determining the state of the optical module in the current identification period according to the state of the optical module in the previous identification period comprises:
in response to determining that the state of the optical module in the previous identification period is a state of being online, determining that the state of the optical module in the current identification period is a state of being pulled out; and
in response to determining that the state of the optical module in the previous identification period is a state of being offline, determining that the state of the optical module in the current identification period is the state of being offline,
wherein the state of the optical module comprises the state of being offline and the state of being pulled out.

7. The method according to claim 1, further comprising: after determining the state of the optical module in the current identification period,
determining a type of the optical module according to the acquired parameter of the optical module; and
configuring a Passive Optical Network, PON, MAC Media Access Address chip of the ONU with an operating mode corresponding to the type of the optical module to perform an ONU service.

8. An Optical Network Unit, ONU, **characterised in that** the ONU comprises:
a first acquiring unit (401) arranged for: acquiring a current identification period for identifying a state of an optical module;
a second acquiring unit (402) arranged for: acquiring a state of the optical module in a previous identification period;
a first dividing unit (403) arranged for: equally dividing the current identification period into at least two sub-periods;
a third acquiring unit (404) arranged for: acquiring, within each sub-period of the current identification period, a parameter of the optical module; and
a first determining unit (405) arranged for: determining the state of the optical module in the current identification period according to the state of the optical module in the previous identification period and a total number of successive sub-periods of the current identification period within each of which acquisition of the parameter of the optical module succeeds.

9. The ONU according to claim 8, wherein the ONU comprises a main control board and a board card, the board card comprises the optical module, and the ONU further comprises a first confirming unit (406) arranged for:
upon confirming, within each sub-period of the current identification period, that a Central Processing Unit, CPU, of the main control board has sent, within the each sub-period of the current identification period, a request for the parameter of the optical module to the optical module, starting timing using a timer;
in response to confirming that the CPU has received, within a timing period of the timer, the parameter of the optical module reported by the optical module, confirming that acquisition of the parameter of the optical module within the each sub-period succeeds; and
in response to confirming that the CPU has received, within the timing period of the timer, no parameter of the optical module reported by the optical module, confirming that acquisition of the parameter of the optical module within the each sub-period fails.

10. The ONU according to claim 8 or 9, wherein the first determining unit (405) is further arranged for:
computing the total number of the successive sub-periods of the current identification period within each of which acquisition of the parameter of the optical module succeeds;
determining whether the total number of the successive sub-periods of the current identification period within each of which acquisition of the parameter of the optical module succeeds is within a pre-set first range; and
in response to determining that the total number of the successive sub-periods of the current identification period within each of which acquisition of the parameter of the optical module succeeds is within the pre-set first range, determining the state of the optical module in the current identification period according to the state of the optical module in the previous identification period.

11. The ONU according to claim 10, wherein the first determining unit (405) is further arranged for:
in response to determining that the state of the optical module in the previous identification period is a state of being online, determining that the state of the optical module in the current identification period is the state of being online; and
in response to determining that the state of the optical module in the previous identification period is a state of being offline, determining that the state of the optical module in the current identification period is a state of being inserted, wherein the state of the optical module comprises the state of being online and the state of being inserted.

12. The ONU according to claim 9, wherein the ONU further comprises a second determining unit (409),
wherein the first confirming unit (406) is further arranged for:
among all sub-periods of the current identification period, computing a total number of successive sub-periods of the current identification period within each of which acquisition of the parameter of the optical module fails;
determining whether the total number of the successive sub-periods of the current identification period within each of which acquisition of the parameter of the optical module fails is within a pre-set second range; and
in response to determining that the total number of the successive sub-periods of the current identification period within each of which acquisition of the parameter of the optical module fails is within the pre-set second range, triggering the second determining unit (409),
wherein the second determining unit (409) is arranged for: determining the state of the optical module in the current identification period according to the state of the optical module in the previous identification period.

13. The ONU according to claim 12, wherein the second determining unit (409) is further arranged for:
in response to determining that the state of the optical module in the previous identification period is a state of being online, determining that the state of the optical module in the current identification period is a state of being pulled out; and
in response to determining that the state of the optical module in the previous identification period is a state of being offline, determining that the state of the optical module in the current identification period is the state of being offline;
wherein the state of the optical module comprises the state of being offline and the state of being pulled out.

14. The ONU according to claim 8, wherein the ONU comprises a Passive Optical Network, PON, MAC Media Access Address chip,
wherein the ONU further comprises a third determining unit (407) and a first configuring unit (408),
wherein the third determining unit (407) is arranged for: determining a type of the optical module according to the parameter of the optical module acquired by the third acquiring unit (404); and
wherein the first configuring unit (408) is arranged for: configuring the PON MAC chip with an operating mode corresponding to the type of the optical module to perform an ONU service.

15. A computer storage medium, having stored therein computer-executable instructions for executing the method according to any one of claims 1-7.

## Patentansprüche

1. Verfahren zum Identifizieren eines Zustandes eines optischen Moduls in einer optischen Netzwerkeinheit (ONU), **dadurch gekennzeichnet, dass** das Verfahren Folgendes umfasst:
Erfassen (21) einer aktuellen Identifizierungsperiode zum Identifizieren des Zustandes des optischen Moduls,
Erfassen (22) eines Zustandes des optischen Moduls in einer vorherigen Identifizierungsperiode,
gleichmäßiges Aufteilen (23) der aktuellen Identifizierungsperiode in mindestens zwei Teilperioden,
Erfassen (24) eines Parameters des optischen Moduls in jeder Teilperiode der aktuellen Identifizierungsperiode und
Bestimmen (25) des Zustandes des optischen Moduls in der aktuellen Identifizierungsperiode gemäß dem Zustand des optischen Moduls in der vorherigen Identifizierungsperiode und einer Gesamtanzahl aufeinanderfolgender Teilperioden der aktuellen Identifizierungsperiode, in welchen jeweils das Erfassen der Parameter des optischen Moduls erfolgreich war.

2. Verfahren nach Anspruch 1, wobei die ONU eine Hauptplatine und eine Platinenkarte umfasst, wobei die Platinenkarte das optische Modul umfasst und das Verfahren Folgendes umfasst:
Senden einer Anfrage nach dem Parameter des optischen Moduls an das optische Modul in jeder Teilperiode der aktuellen Identifizierungsperiode durch eine zentrale Verarbeitungseinheit (CPU) der Hauptplatine und gleichzeitiges Starten einer Zeitmessung mit Hilfe eines Zeitgebers,
Rückmelden, dass die Erfassung des Parameters des optischen Moduls in jeder Teilperiode erfolgreich war, in Reaktion auf das Empfangen des Parameters des optischen Moduls, der durch das optische Modul gemeldet wird, durch die CPU in einer Zeitmessperiode des Zeitgebers, und
Rückmelden, dass die Erfassung des Parameters des optischen Moduls in jeder Teilperiode fehlgeschlagen ist, in Reaktion auf das Nichtempfangen eines Parameters des optischen Moduls, der durch das optische Modul gemeldet wird, durch die CPU in einer Zeitmessperiode des Zeitgebers.

3. Verfahren nach Anspruch 1 oder 2, ferner Folgendes umfassend:
Errechnen der Gesamtanzahl der aufeinanderfolgenden Teilperioden der aktuellen Identifizierungsperiode, in welchen jeweils die Erfassung des Parameters erfolgreich war,
Bestimmen, ob die Gesamtanzahl der aufeinanderfolgenden Teilperioden der aktuellen Identifizierungsperiode, in welchen jeweils die Erfassung des Parameters erfolgreich war, in einem voreingestellten ersten Bereich liegt, und
Bestimmen des Zustandes des optischen Moduls in der aktuellen Identifizierungsperiode gemäß dem Zustand des optischen Moduls in der vorherigen Identifizierungsperiode, in Reaktion auf das Bestimmen, dass die Gesamtanzahl der aufeinanderfolgenden Teilperioden der aktuellen Identifizierungsperiode, in welchen jeweils die Erfassung des Parameters erfolgreich war, in dem voreingestellten ersten Bereich liegt.

4. Verfahren nach Anspruch 3, wobei das Bestimmen des Zustandes des optischen Moduls in der aktuellen Identifizierungsperiode gemäß dem Zustand des optischen Moduls in der vorherigen Identifizierungsperiode in Reaktion auf das Bestimmen, dass die Gesamtanzahl der aufeinanderfolgenden Teilperioden der aktuellen Identifizierungsperiode, in welchen jeweils die Erfassung des Parameters erfolgreich war, in dem voreingestellten ersten Bereich liegt, Folgendes umfasst:
Bestimmen, dass der Zustand des optischen Moduls in der aktuellen Identifizierungsperiode der Zustand des Online-Seins ist, in Reaktion auf das Bestimmen, dass der Zustand des optischen Moduls in der vorherigen Identifizierungsperiode ein Zustand des Online-Seins ist, und
Bestimmen, dass der Zustand des optischen Moduls in der aktuellen Identifizierungsperiode ein Zustand des Eingesetztseins ist, in Reaktion auf das Bestimmen, dass der Zustand des optischen Moduls in der vorherigen Identifizierungsperiode ein Zustand des Offline-Seins ist, wobei der Zustand des optischen Moduls den Zustand des Online-Seins und des Eingesetztseins umfasst.

5. Verfahren nach Anspruch 2, ferner Folgendes umfassend:
Errechnen einer Gesamtanzahl aufeinanderfolgender Teilperioden der aktuellen Identifizierungsperiode, in welchen jeweils das Erfassen des Parameters des optischen Moduls fehlschlägt, aus allen Teilperioden der aktuellen Identifizierungsperiode,
Bestimmen, ob die Gesamtanzahl der aufeinanderfolgenden Teilperioden der aktuellen Identifizierungsperiode, in welchen jeweils das Erfassen des Parameters des optischen Moduls fehlschlägt, in einem voreingestellten zweiten Bereich liegt, und
Bestimmen des Zustandes des optischen Moduls in der aktuellen Identifizierungsperiode gemäß dem Zustand des optischen Moduls in der vorherigen Identifizierungsperiode, in Reaktion auf das Bestimmen, dass die Gesamtanzahl der aufeinanderfolgenden Teilperioden der aktuellen Identifizierungsperiode, in welchen jeweils die Erfassung des Parameters fehlschlägt, in dem voreingestellten zweiten Bereich liegt.

6. Verfahren nach Anspruch 5, wobei das Bestimmen des Zustandes des optischen Moduls in der aktuellen Identifizierungsperiode gemäß dem Zustand des optischen Moduls in der vorherigen Identifizierungsperiode in Reaktion auf das Bestimmen, dass die Gesamtanzahl der aufeinanderfolgenden Teilperioden der aktuellen Identifizierungsperiode, in welchen jeweils die Erfassung des Parameters fehlschlägt, in einem voreingestellten zweiten Bereich liegt, Folgendes umfasst:
Bestimmen, dass der Zustand des optischen Moduls in der aktuellen Identifizierungsperiode der Zustand des Herausgezogenseins ist, in Reaktion auf das Bestimmen, dass der Zustand des optischen Moduls in der vorherigen Identifizierungsperiode ein Zustand des Online-Seins ist, und
Bestimmen, dass der Zustand des optischen Moduls in der aktuellen Identifizierungsperiode der Zustand des Offline-Seins ist, in Reaktion auf das Bestimmen, dass der Zustand des optischen Moduls in der vorherigen Identifizierungsperiode ein Zustand des Offline-Seins ist,
wobei der Zustand des optischen Moduls den Zustand des Offline-Seins und des Herausgezogenseins umfasst.

7. Verfahren nach Anspruch 1, nach dem Bestimmen des Zustandes des optischen Moduls in der aktuellen Identifizierungsperiode ferner Folgendes umfassend:
Bestimmen einer Art des optischen Moduls gemäß dem erfassten Parameter des optischen Moduls und
Konfigurieren eines PON-(Passive-Optical-Network-)MAC-(Media-Access-Address-)Chips der ONU mit einem Betriebsmodus, welcher der Art des optischen Moduls entspricht, um einen ONU-Dienst auszuführen.

8. Optische Netzwerkeinheit (ONU), **dadurch gekennzeichnet, dass** die ONU Folgendes umfasst:
eine erste Erfassungseinheit (401), die für Folgendes angeordnet ist: Erfassen einer aktuellen Identifizierungsperiode zum Identifizieren eines Zustandes des optischen Moduls,
eine zweite Erfassungseinheit (402), die für Folgendes angeordnet ist: Erfassen eines Zustandes des optischen Moduls in einer vorherigen Identifizierungsperiode,
eine erste Aufteilungseinheit (403), die für Folgendes angeordnet ist: gleichmäßiges Aufteilen der aktuellen Identifizierungsperiode in mindestens zwei Teilperioden,
eine dritte Erfassungseinheit (404), die für Folgendes angeordnet ist: Erfassen eines Parameters des optischen Moduls in jeder Teilperiode der aktuellen Identifizierungsperiode, und
eine erste Bestimmungseinheit (405), die für Folgendes angeordnet ist: Bestimmen des Zustandes des optischen Moduls in der aktuellen Identifizierungsperiode gemäß dem Zustand des optischen Moduls in der vorherigen Identifizierungsperiode und einer Gesamtanzahl aufeinanderfolgender Teilperioden der aktuellen Identifizierungsperiode, in welchen jeweils das Erfassen des Parameters des optischen Moduls erfolgreich war.

9. ONU nach Anspruch 8, wobei die ONU eine Hauptplatine und eine Platinenkarte umfasst, wobei die Platinenkarte das optische Modul umfasst, und die ONU ferner eine erste Rückmeldungseinheit (406) umfasst, die für Folgendes angeordnet ist:
Starten einer Zeitmessung mit Hilfe eines Zeitgebers auf die Rückmeldung in jeder Teilperiode der aktuellen Identifizierungsperiode hin, dass eine zentrale Verarbeitungseinheit (CPU) der Hauptplatine in jeder Teilperiode der aktuellen Identifizierungsperiode eine Anfrage nach dem Parameter des optischen Moduls an das optische Modul gesendet hat,
Rückmelden, dass die Erfassung des Parameters des optischen Moduls in jeder Teilperiode erfolgreich war, in Reaktion auf das Rückmelden, dass die CPU in einer Zeitmessperiode des Zeitgebers den Parameter des optischen Moduls empfangen hat, der durch das optische Modul gemeldet wird, und
Rückmelden, dass die Erfassung des Parameters des optischen Moduls in jeder Teilperiode fehlgeschlagen ist, in Reaktion auf das Rückmelden, dass die CPU in der Zeitmessperiode des Zeitgebers keinen Parameter des optischen Moduls empfangen hat, der durch das optische Modul gemeldet wird.

10. ONU nach Anspruch 8 oder 9, wobei die erste Bestimmungseinheit (405) ferner für Folgendes angeordnet ist:
Errechnen der Gesamtanzahl der aufeinanderfolgenden Teilperioden der aktuellen Identifizierungsperiode, in welchen jeweils die Erfassung des Parameters erfolgreich war,
Bestimmen, ob die Gesamtanzahl der aufeinanderfolgenden Teilperioden der aktuellen Identifizierungsperiode, in welchen jeweils die Erfassung des Parameters erfolgreich war, in einem voreingestellten ersten Bereich liegt, und
Bestimmen des Zustandes des optischen Moduls in der aktuellen Identifizierungsperiode gemäß dem Zustand des optischen Moduls in der vorherigen Identifizierungsperiode, in Reaktion auf das Bestimmen, dass die Gesamtanzahl der aufeinanderfolgenden Teilperioden der aktuellen Identifizierungsperiode, in welchen jeweils die Erfassung des Parameters erfolgreich war, in dem voreingestellten ersten Bereich liegt.

11. ONU nach Anspruch 10, wobei die erste Bestimmungseinheit (405) ferner für Folgendes angeordnet ist:
Bestimmen, dass der Zustand des optischen Moduls in der aktuellen Identifizierungsperiode der Zustand des Online-Seins ist, in Reaktion auf das Bestimmen, dass der Zustand des optischen Moduls in der vorherigen Identifizierungsperiode ein Zustand des Online-Seins ist, und
Bestimmen, dass der Zustand des optischen Moduls in der aktuellen Identifizierungsperiode der Zustand des Eingesetztseins ist, in Reaktion auf das Bestimmen, dass der Zustand des optischen Moduls in der vorherigen Identifizierungsperiode ein Zustand des Offline-Seins ist, wobei der Zustand des optischen Moduls den Zustand des Offline-Seins und des Eingesetztseins umfasst.

12. ONU nach Anspruch 9, wobei die ONU ferner eine zweite Bestimmungseinheit (409) umfasst,
wobei die erste Rückmeldungseinheit (406) ferner für Folgendes angeordnet ist:
Errechnen einer Gesamtanzahl aufeinanderfolgender Teilperioden der aktuellen Identifizierungsperiode, in welchen jeweils das Erfassen des Parameters des optischen Moduls fehlschlägt, aus allen Teilperioden der aktuellen Identifizierungsperiode,
Bestimmen, ob die Gesamtanzahl der aufeinanderfolgenden Teilperioden der aktuellen Identifizierungsperiode, in welchen jeweils das Erfassen des Parameters des optischen Moduls fehlschlägt, in einem voreingestellten zweiten Bereich liegt, und
Ansteuern der zweiten Bestimmungseinheit (409) in Reaktion auf das Bestimmen, dass die Gesamtanzahl der aufeinanderfolgenden Teilperioden der aktuellen Identifizierungsperiode, in welchen jeweils die Erfassung des Parameters fehlschlägt, in dem voreingestellten zweiten Bereich liegt,
wobei die zweite Bestimmungseinheit (409) für Folgendes angeordnet ist: Bestimmen des Zustandes des optischen Moduls in der aktuellen Identifizierungsperiode gemäß dem Zustand des optischen Moduls in der vorherigen Identifizierungsperiode.

13. ONU nach Anspruch 12, wobei die zweite Bestimmungseinheit (409) ferner für Folgendes angeordnet ist:
Bestimmen, dass der Zustand des optischen Moduls in der aktuellen Identifizierungsperiode der Zustand des Herausgezogenseins ist, in Reaktion auf das Bestimmen, dass der Zustand des optischen Moduls in der vorherigen Identifizierungsperiode ein Zustand des Online-Seins ist, und
Bestimmen, dass der Zustand des optischen Moduls in der aktuellen Identifizierungsperiode der Zustand des Offline-Seins ist, in Reaktion auf das Bestimmen, dass der Zustand des optischen Moduls in der vorherigen Identifizierungsperiode ein Zustand des Offline-Seins ist,
wobei der Zustand des optischen Moduls den Zustand des Offline-Seins und des Herausgezogenseins umfasst.

14. ONU nach Anspruch 8, wobei die ONU einen PON-(Passive-Optical-Network-)MAC-(Media-Access-Address-)Chip umfasst,
wobei die ONU ferner eine dritte Bestimmungseinheit (407) und eine erste Konfigurationseinheit (408) umfasst,
wobei die dritte Bestimmungseinheit (407) für Folgendes angeordnet ist: Bestimmen einer Art des optischen Moduls gemäß dem Parameter des optischen Moduls, der durch die dritte Erfassungseinheit (404) erfasst wird, und
wobei die erste Konfigurationseinheit (408) für Folgendes angeordnet ist: Konfigurieren des PON-MAC-Chip mit einem Betriebsmodus, welcher der Art des optischen Moduls entspricht, um einen ONU-Dienst auszuführen.

15. Computerspeichermedium, auf dem computerausführbare Befehle zum Ausführen des Verfahrens nach einem der Ansprüche 1 bis 7 gespeichert sind.

## Revendications

1. Procédé d'identification d'un état d'un module optique dans une unité de réseau optique, ONU, **caractérisé en ce que** le procédé comprend les étapes ci-dessous consistant à :
acquérir (21) une période d'identification en cours en vue d'identifier l'état du module optique ;
acquérir (22) un état du module optique au cours d'une période d'identification précédente ;
diviser de façon égale (23) la période d'identification en cours en au moins deux sous-périodes ;
acquérir (24), au cours de chaque sous-période de la période d'identification en cours, un paramètre du module optique ; et
déterminer (25) l'état du module optique au cours de la période d'identification en cours selon l'état du module optique au cours de la période d'identification précédente et un nombre total de sous-périodes successives de la période d'identification en cours au cours de chacune desquelles l'acquisition du paramètre du module optique réussit.

2. Procédé selon la revendication 1, dans lequel l'unité ONU comprend un tableau de commande principal et une carte de tableau, la carte de tableau comprend le module optique, et le procédé comprend les étapes ci-dessous consistant à :
envoyer, par le biais d'une unité centrale de traitement, CPU, du tableau de commande principal, au cours de chaque sous-période de la période d'identification en cours, une demande concernant le paramètre du module optique, au module optique ; et simultanément, démarrer une temporisation en utilisant un temporisateur ;
en réponse à la réception, par l'unité CPU, au cours d'une période de temporisation du temporisateur, du paramètre du module optique, signalé par le module optique, confirmer la réussite de l'acquisition du paramètre du module optique au cours de chaque sous-période ; et
en réponse à l'absence de réception, par l'unité CPU, au cours de la période de temporisation du temporisateur, d'un paramètre du module optique, signalé par le module optique, confirmer l'échec de l'acquisition du paramètre du module optique au cours de chaque sous-période.

3. Procédé selon la revendication 1 ou 2, comprenant en outre les étapes ci-dessous consistant à :
calculer le nombre total des sous-périodes successives de la période d'identification en cours au cours de chacune desquelles l'acquisition du paramètre du module optique réussit ;
déterminer si le nombre total des sous-périodes successives de la période d'identification en cours au cours de chacune desquelles l'acquisition du paramètre du module optique réussit se situe dans une première plage prédéfinie ; et
en réponse à la détermination selon laquelle le nombre total des sous-périodes successives de la période d'identification en cours au cours de chacune desquelles l'acquisition du paramètre du module optique réussit se situe dans la première plage prédéfinie, déterminer l'état du module optique au cours de la période d'identification en cours selon l'état du module optique au cours de la période d'identification précédente.

4. Procédé selon la revendication 3, dans lequel, l'étape consistant à, en réponse à la détermination selon laquelle le nombre total des sous-périodes successives de la période d'identification en cours au cours de chacune desquelles l'acquisition du paramètre du module optique réussit se situe dans la première plage prédéfinie, déterminer l'état du module optique au cours de la période d'identification en cours selon l'état du module optique au cours de la période d'identification précédente, comprend les étapes ci-dessous consistant à :
en réponse à la détermination selon laquelle l'état du module optique au cours de la période d'identification précédente est un état « en ligne », déterminer que l'état du module optique au cours de la période d'identification en cours est l'état « en ligne » ; et
en réponse à la détermination selon laquelle l'état du module optique au cours de la période d'identification précédente est un état « hors ligne », déterminer que l'état du module optique au cours de la période d'identification en cours est un état d'insertion, dans lequel l'état du module optique comprend l'état « en ligne » et l'état d'insertion.

5. Procédé selon la revendication 2, comprenant en outre les étapes ci-dessous consistant à :
parmi toutes les sous-périodes de la période d'identification en cours, calculer un nombre total de sous-périodes successives de la période d'identification en cours au cours de chacune desquelles l'acquisition du paramètre du module optique échoue ;
déterminer si le nombre total des sous-périodes successives de la période d'identification en cours au cours de chacune desquelles l'acquisition du paramètre du module optique échoue se situe dans une seconde plage prédéfinie ; et
en réponse à la détermination selon laquelle le nombre total des sous-périodes successives de la période d'identification en cours au cours de chacune desquelles l'acquisition du paramètre du module optique échoue se situe dans la seconde plage prédéfinie, déterminer l'état du module optique au cours de la période d'identification en cours selon l'état du module optique au cours de la période d'identification précédente.

6. Procédé selon la revendication 5, dans lequel, l'étape consistant à, en réponse à la détermination selon laquelle le nombre total des sous-périodes successives de la période d'identification en cours au cours de chacune desquelles l'acquisition du paramètre du module optique échoue se situe dans la seconde plage prédéfinie, déterminer l'état du module optique au cours de la période d'identification en cours selon l'état du module optique au cours de la période d'identification précédente, comprend les étapes ci-dessous consistant à :
en réponse à la détermination selon laquelle l'état du module optique au cours de la période d'identification précédente est un état « en ligne », déterminer que l'état du module optique au cours de la période d'identification en cours correspond à un état d'extraction ; et
en réponse à la détermination selon laquelle l'état du module optique au cours de la période d'identification précédente est un état « hors ligne », déterminer que l'état du module optique au cours de la période d'identification en cours correspond à l'état « hors ligne » ;
dans lequel l'état du module optique comprend l'état « hors ligne » et l'état d'extraction.

7. Procédé selon la revendication 1, comprenant en outre les étapes ci-dessous consistant à : suite à la détermination de l'état du module optique au cours de la période d'identification en cours,
déterminer un type du module optique selon le paramètre acquis du module optique ; et
configurer une puce d'adresse de commande d'accès au support physique, MAC, de réseau optique passif, PON, de l'unité ONU, avec un mode de fonctionnement correspondant au type du module optique, en vue de mettre en oeuvre un service d'unité ONU.

8. Unité de réseau optique, ONU, **caractérisée en ce que** l'unité ONU comprend :
une première unité d'acquisition (401) agencée de manière à : acquérir une période d'identification en cours en vue d'identifier un état d'un module optique ;
une deuxième unité d'acquisition (402) agencée de manière à : acquérir un état du module optique au cours d'une période d'identification précédente ;
une première unité de division (403) agencée de manière à : diviser de façon égale la période d'identification en cours en au moins deux sous-périodes ;
une troisième unité d'acquisition (404) agencée de manière à : acquérir, au cours de chaque sous-période de la période d'identification en cours, un paramètre du module optique ; et
une première unité de détermination (405) agencée de manière à : déterminer l'état du module optique au cours de la période d'identification en cours selon l'état du module optique au cours de la période d'identification précédente et un nombre total de sous-périodes successives de la période d'identification en cours au cours de chacune desquelles l'acquisition du paramètre du module optique réussit.

9. Unité ONU selon la revendication 8, dans laquelle l'unité ONU comprend un tableau de commande principal et une carte de tableau, la carte de tableau comprend le module optique, et l'unité ONU comprend en outre une première unité de confirmation (406) agencée de manière à :
suite à une confirmation, au cours de chaque sous-période de la période d'identification en cours, qu'une unité centrale de traitement, CPU, du tableau de commande principal a envoyé, au cours de chaque dite sous-période de la période d'identification en cours, une demande pour le paramètre du module optique au module optique, démarrer une temporisation en utilisant un temporisateur ;
en réponse à la confirmation que l'unité CPU a reçu, au cours d'une période de temporisation du temporisateur, le paramètre du module optique signalé par le module optique, confirmer la réussite de l'acquisition du paramètre du module optique au cours de chaque dite sous-période ; et
en réponse à la confirmation que l'unité centrale de traitement n'a reçu, au cours de la période de temporisation du temporisateur, aucun paramètre du module optique signalé par le module optique, confirmer l'échec de l'acquisition du paramètre du module optique au cours de chaque dite sous-période.

10. Unité ONU selon la revendication 8 ou 9, dans laquelle la première unité de détermination (405) est en outre agencée de manière à :
calculer le nombre total des sous-périodes successives de la période d'identification en cours au cours de chacune desquelles l'acquisition du paramètre du module optique réussit ;
déterminer si le nombre total des sous-périodes successives de la période d'identification en cours au cours de chacune desquelles l'acquisition du paramètre du module optique réussit se situe dans une première plage prédéfinie ; et
en réponse à la détermination selon laquelle le nombre total des sous-périodes successives de la période d'identification en cours au cours de chacune desquelles l'acquisition du paramètre du module optique réussit se situe dans la première plage prédéfinie, déterminer l'état du module optique au cours de la période d'identification en cours selon l'état du module optique au cours de la période d'identification précédente.

11. Unité ONU selon la revendication 10, dans laquelle la première unité de détermination (405) est en outre agencée de manière à :
en réponse à la détermination selon laquelle l'état du module optique au cours de la période d'identification précédente est un état « en ligne », déterminer que l'état du module optique au cours de la période d'identification en cours est l'état « en ligne » ; et
en réponse à la détermination selon laquelle l'état du module optique au cours de la période d'identification précédente est un état « hors ligne », déterminer que l'état du module optique au cours de la période d'identification en cours est un état d'insertion, l'état du module optique comprenant l'état « en ligne » et l'état d'insertion.

12. Unité ONU selon la revendication 9, dans laquelle l'unité ONU comprend en outre une deuxième unité de détermination (409) ;
dans laquelle la première unité de confirmation (406) est en outre agencée de manière à :
parmi toutes les sous-périodes de la période d'identification en cours, calculer un nombre total de sous-périodes successives de la période d'identification en cours au cours de chacune desquelles l'acquisition du paramètre du module optique échoue ;
déterminer si le nombre total des sous-périodes successives de la période d'identification en cours au cours de chacune desquelles l'acquisition du paramètre du module optique échoue se situe dans une seconde plage prédéfinie ; et
en réponse à la détermination selon laquelle le nombre total des sous-périodes successives de la période d'identification en cours au cours de chacune desquelles l'acquisition du paramètre du module optique échoue se situe dans la seconde plage prédéfinie, déclencher la deuxième unité de détermination (409) ;
dans laquelle la deuxième unité de détermination (409) est agencée de manière à : déterminer l'état du module optique au cours de la période d'identification en cours selon l'état du module optique au cours de la période d'identification précédente.

13. Unité ONU selon la revendication 12, dans laquelle la deuxième unité de détermination (409) est en outre agencée de manière à :
en réponse à la détermination selon laquelle l'état du module optique au cours de la période d'identification précédente est un état « en ligne », déterminer que l'état du module optique au cours de la période d'identification en cours correspond à un état d'extraction ; et
en réponse à la détermination selon laquelle l'état du module optique au cours de la période d'identification précédente est un état « hors ligne », déterminer que l'état du module optique au cours de la période d'identification en cours correspond à l'état « hors ligne » ;
l'état du module optique comprenant l'état « hors ligne » et l'état d'extraction.

14. Unité ONU selon la revendication 8, dans laquelle l'unité ONU comprend une puce d'adresse de commande d'accès au support physique, MAC, de réseau optique passif, PON ;
dans laquelle l'unité ONU comprend en outre une troisième unité de détermination (407) et une première unité de configuration (408) ;
dans laquelle la troisième unité de détermination (407) est agencée de manière à :
déterminer un type du module optique selon le paramètre du module optique acquis par la troisième unité d'acquisition (404) ; et
dans laquelle la première unité de configuration (408) est agencée de manière à : configurer la puce d'adresse MAC de réseau PON avec un mode de fonctionnement correspondant au type du module optique en vue de mettre en oeuvre un service d'unité ONU.

15. Support de stockage informatique, dans lequel sont stockées des instructions exécutables par ordinateur en vue d'exécuter le procédé selon l'une quelconque des revendications 1 à 7.
